(19) Europäisches Patentamt

European Patent Office

Office européen des brevets

(11) **EP 1 180 587 B1**

(12) **EUROPÄISCHE PATENTSCHRIFT**

(45) Veröffentlichungstag und Bekanntmachung des Hinweises auf die Patenterteilung:
**31.03.2004   Patentblatt 2004/14**

(51) Int Cl.$^7$: **F02B 23/10**, F02F 1/24

(21) Anmeldenummer: **01116467.0**

(22) Anmeldetag: **07.07.2001**

(54) **Fremdgezündete, direkt einspritzende Hubkolben-Brennkraftmaschine mit einer homogenen Gemischbildung**

Externally ignited direct injecting reciprocating piston internal combustion engine with homogeneous mixture formation

Moteur à combustion interne à piston alternatif avec allumage par étincelle, injection directe et mélange homogène

(84) Benannte Vertragsstaaten:
**AT DE ES FR GB IT**

(30) Priorität: **19.08.2000  DE 10040690**

(43) Veröffentlichungstag der Anmeldung:
**20.02.2002   Patentblatt 2002/08**

(73) Patentinhaber: **Bayerische Motoren Werke Aktiengesellschaft**
**80809 München (DE)**

(72) Erfinder:
• **Neugebauer, Stephan, Dr.**
  **82441 Ohlstadt (DE)**
• **Sallmann, Michael, Dr.**
  **80799 München (DE)**
• **Schleich, Manfred**
  **82110 Germering (DE)**

(56) Entgegenhaltungen:
EP-A- 0 924 402          DE-C- 4 223 172
US-A- 5 908 018

• **PATENT ABSTRACTS OF JAPAN vol. 1999, no. 12, 29. Oktober 1999 (1999-10-29) & JP 11 182331 A (NISSAN MOTOR CO LTD), 6. Juli 1999 (1999-07-06)**

**Beschreibung**

Die Erfindung bezieht sich auf eine fremdgezündete, direkteinspritzende Hubkolben-Brennkraftmaschine mit einer homogenen Gemischbildung, die gemäß dem Oberbegriff des Patentanspruches 1 mit einem im Umfangsbereich einer Brennraum-Mulde im Zylinderkopf zu dessen maschinenseitiger Anschlussfläche geneigt angeordneten Injektor ausgerüstet ist sowie mit zwei Einlassventilen mit einem Einspritzstrahl des Injektors in Richtung eines Hubkolbens ablenkenden Lufteinströmungen.

Eine derartige Brennkraftmaschine ist beispielsweise aus der EP 0 924 402 A1 bekannt, wobei für eine akzeptable Durchmischung des abgelenkten Einspritzstrahles mit den Lufteinströmungen ein in Relation zum Zylinderdurchmesser in Beziehung gesetzter Abstandswert der Injektorspitze von der Ebene der Ventilachsen der beiden Einlassventile einen vorbestimmten Wert nicht unterschreiten soll.

Die bekannte Injektorlage der vorbeschriebenen Konfiguration kann bei einer gattungsgemäßen Brennkraftmaschine mit Einlassventilen mit vollvariablen Ventilhüben zu erheblichen Ruß-Emissionen führen. Bekanntlich treten bei geringen Ventilhüben die Einlass-Strömungen mit hoher Geschwindigkeit in den Brennraum ein, wobei sich die Strömungsrichtungen hierbei an den Konturen der Ventilsitzringe und der Ventile derart orientieren, dass sich eine in weiten Bereichen flach an der Brennraum-Mulde im Zylinderkopf anliegende Strömung ergibt. Bei einer zeitgleichen Kraftstoffeinspritzung wird somit ein Teil des Kraftstoffes durch die Einlass-Strömungen an die Zylinderwand verweht. Dieser Kraftstoffwandauftrag ist die Ursache für die erhöhten Ruß-Emissionen. Bei längeren Laufzeiten treten als weitere Nachteile erhöhte Verschleißprobleme hinzu.

Der Erfindung liegt die Aufgabe zugrunde, für eine gattungsgemäße Hubkolben-Brennkraftmaschine eine verbesserte Injektorlage aufzuzeigen ohne Ruß-Emissionen.

Diese Aufgabe ist mit dem einzigen Patentanspruch dadurch gelöst, dass in der Brennraum-Mulde zwei Einlassventile mit vollvariablen Ventilhüben angeordnet sind und dass der Injektor vom Umfangsbereich der Brennraum-Mulde weg in Richtung der Einlassventile mit seiner Injektorspitze mittig zwischen diesen derart angeordnet ist, dass der Durchstoßpunkt der Injektorachse zumindest durch die Ebene eines Einlassventil-Tellers in Höhe des Dichtsitzes einen Abstand "a" aufweist, wobei für eine optimale Injektorposition gilt: $a/(D_{ev}/2) \leq 1,6$ mit $D_{ev}$ = Einlassventil-Durchmesser.

Mit der Erfindung ist in vorteilhafter Weise erreicht, dass der Einspritzstrahl in das in Richtung Kolben sich ausbildende Strömungsfeld gezielt gerichtet ist, das sich insbesondere bei geringen Ventilhüben aus den beiden unter einem stumpfen Winkel aufeinander treffenden Lufteinlass-Strömungen herausbildet.

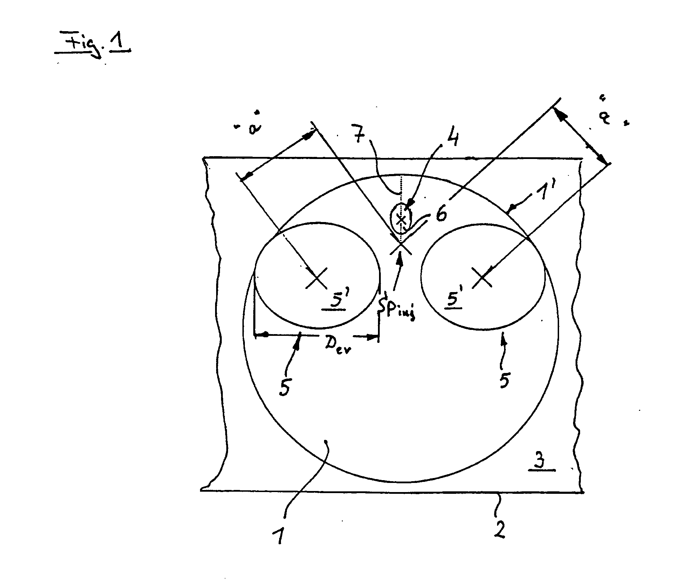

Die Erfindung ist anhand einer in der Zeichnung schematisch dargestellten Injektorlage in einer Brennraum-Mulde beschrieben.

Eine fremdgezündete, direkt einspritzende Hubkolben-Brennkraftmaschine mit einer homogenen Gemischbildung ist mit einem im Umfangsbereich einer Brennraum-Mulde 1 im Zylinderkopf 2 zu dessen maschinenseitiger Anschlussfläche 3 geneigt angeordneten Injektor 4 ausgerüstet. Weiter sind in der Brennraum-Mulde 1 zwei Einlassventile 5 vorgesehen, deren Lufteinströmungen einen Einspritzstrahl des Injektors 4 in Richtung eines Hubkolbens ablenken.

Um zu vermeiden, dass ein aus beiden Luftströmungen insbesondere bei geringen Ventilhüben sich ausbildendes Strömungsfeld mit anteiliger Strömung entlang der Wand der Brennraum-Mulde 1 und einer anschließenden Zylinderwand zu einer Kraftstoffauftragung auf diese Bereiche mit hoher Ruß-Emission führt, wird erfindungsgemäß vorgeschlagen, dass in der Brennraum-Mulde 1 zwei Einlassventile 5 mit vollvariablen Ventilhüben angeordnet sind und dass der Injektor 4 vom Umfangsbereich 1' der Brennraum-Mulde 1 weg in Richtung der Einlassventile 5 mit seiner Injektorspitze 6 mittig zwischen diesen angeordnet ist. Die Anordnung der Injektorspitze 6 des Injektors 4 ist derart getroffen, dass der Durchstoßpunkt $Sp_{inj}$ der Injektorachse 7 durch die Ebene eines oder beider Einlassventil-Teller 5' in Höhe des Dichtsitzes oder der Dichtsitze einen Abstand "a" aufweist. Hierbei gilt für eine optimale Injektorposition: $a/(D_{ev}/2) \leq 1,6$, wobei $D_{ev}$/Einlassventil-Durchmesser bedeutet.

Mit dieser Injektoranordnung werden die Ruß- und HC-Emissionen reduziert. Das Verschleißverhalten wird ferner vorteilhaft verbessert und die Schmierölverdünnung reduziert.

Eine bevorzugte Vorrichtung zur mechanischen, voll-variablen Hubverstellung ist beispielsweise in der DE 42 23 172 C1 sowie in der deutschen Patentanmeldung 101 23 186 beschrieben. Gemeinsames Kennzeichen beider unterschiedlicher Vorrichtungen ist, dass jedes Einlassventil (5) unter Zwischenschaltung eines mit einer Rolle ausgerüsteten Übertragungselementes - z.B. Schlepphebel oder Tasse bzw. Stößel - in Wirkverbindung steht mit einer eine Leerhubkurve und eine Hubkurve umfassenden Steuerbahn in einem Endbereich eines zur Hubbetätigung des Einlassventils (5) von einem Nocken einer Nockenwelle gesteuerten Schwenkhebels, der federbelastet über eine Kurvenbahn dem Nocken zugeordnet ist und andernends zur variablen Hubverstellung über einen mittels einer Verstelleinrichtung gesteuert lageveränderbaren und fixierbaren Schwingdrehpunkt längs einer Kurvenbahn abgestützt ist.

Anstelle der vorbeschriebenen mechanischen Vorrichtung zur variablen Hubverstellung kann für jedes der Einlassventile (5) auch ein elektromagnetischer Aktuator vorgesehen sein.

## Patentansprüche

1. Fremdgezündete, direkteinspritzende Hubkolben-Brennkraftmaschine mit einer homogenen Gemischbildung,

   - die mit einem im Umfangsbereich einer Brennraummulde (1) im Zylinderkopf (2) zu dessen maschinenseitiger Anschlussfläche (3) geneigt angeordneten Injektor (4) ausgerüstet ist, sowie
   - mit zwei Einlassventilen (5) mit einem Einspritzstrahl des Injektors (4) in Richtung eines Hubkolbens ablenkenden Lufteinströmungen, wobei
   - in der Brennraummulde (1) zwei Einlassventile (5) mit vollvariablen Ventilhüben angeordnet sind und
   - dass der Injektor (4) vom Umfangsbereich (1') der Brennraummulde (1) weg in Richtung der Einlassventile (5) mit seiner Injektorspitze (6) mittig zwischen diesen derart angeordnet ist,

   **dadurch gekennzeichnet,**

   - **dass** der Durchstoßpunkt ($Sp_{inj}$) der Injektorachse (7) zumindest durch die Ebene eines Einlassventiltellers (5') in Höhe des Dichtsitzes einen Abstand "a" von einem Zentrum eines Einlassventiltellers (5') aufweist, wobei
   - für eine optimale Injektorposition gilt:

   $$a/(D_{ev}/2) \leq 1,6$$

   mit $D_{ev}$ = Einlassventildurchmesser.

2. Brennkraftmaschine nach Anspruch 1, **dadurch gekennzeichnet,**

   - **dass** die Einlassventile (5) mit einer Vorrichtung zur variablen Hubverstellung zusammenwirken, wobei
   - jedes Einlassventil (5) unter Zwischenschaltung eines mit einer Rolle ausgerüsteten Übertragungselementes (Schlepphebel, Tasse) in Wirkverbindung steht mit einer eine Leerhubkurve und eine Hubkurve umfassenden Steuerbahn in einem Endbereich eines zur Hubbetätigung des Einlassventils (5) von einem Nokken einer Nockenwelle gesteuerten Schwenkhebels, der
   - federbelastet über eine Kurvenbahn dem Nokken zugeordnet ist und andernends zur variablen Hubverstellung über einen mittels einer Verstelleinrichtung gesteuert lageveränderbaren und fixierbaren Schwingdrehpunkt längs einer Kurvenbahn abgestützt ist.

3. Brennkraftmaschine nach Anspruch 1, **dadurch gekennzeichnet, dass** zur variablen Hubverstellung eines Einlassventils (5) ein elektromagnetischer Aktuator dient.

## Claims

1. A spark-ignition direct-injection reciprocating engine with homogeneous mixture formation and

   . equipped with an injector (4) in the peripheral region of a combustion-chamber cavity (1) in the cylinder head (2) and inclined towards the connecting surface (3) thereof adjoining the engine and comprising two inlet valves (5), the jet from the injector (4) being in the direction of piston-deflecting air inflows, wherein

   . two inlet valves (5) with fully variable valve strokes are disposed in the combustion-chamber cavity (1) and

   . the injector (4) is at a distance from the peripheral region (1') of the combustion-chamber cavity (1) in the direction of the inlet valves (5) and its tip (6) is so disposed centrally between the inlet valves,

   **characterised in that**

   . the point of intersection ($Sp_{inj}$) between the injector axis (7) and at least the plane of an inlet valve disc (5') at the level of the tight fit is at a distance "a" from a centre of an inlet valve disc (5'), wherein the value for an optimum injector position is:

   $$a/(D_{ev}/2) \leq 1.6$$

   where $D_{ev}$ = diameter of inlet valve.

2. An engine according to claim 1, **characterised in that**

   - the inlet valves (5) co-operate with a device for variable adjustment of stroke, wherein
   - each inlet valve (5), with interposition of a transmission element (drag lever or cup) equipped with a roller, is in operative connection with a control path comprising an idling curve and a stroke curve in an end region of a pivoted lever controlled by a cam on a camshaft for stroke actuation of the inlet valve (5),
   - the lever being spring-biased over a curved sector and associated with the cam, whereas the other end, for the purpose of variable stroke adjustment, is braced by an oscillating pivot which can be fixed or varied in position in controlled manner by means of an adjusting device.

**3.** An engine according to claim 1, **characterised in that** an electromagnetic actuator is used for variable stroke adjustment of an inlet valve (5).

## Revendications

**1.** Moteur à combustion interne à piston alternatif, à allumage commandé et à injection directe avec une formation homogène du mélange,

- qui est équipé d'un injecteur 4 disposé en inclinaison vers sa face de raccordement 3 côté moteur dans la zone périphérique d'un creux de la chambre de combustion 1 situé dans la culasse de cylindre 2 et
- équipé de deux soupapes d'admission 5 comportant des arrivées d'air qui dévient un jet d'injection de l'injecteur 4 en direction d'un piston alternatif,
- deux soupapes d'admission 5 dont les levées de soupape sont entièrement progressives étant disposées dans le creux de la chambre de combustion 1 et
- l'injecteur 4 depuis la zone périphérique 1' du creux de la chambre de combustion 1 en direction des soupapes d'admission 5 étant disposé au milieu de celles-ci par la pointe d'injecteur 6,

**caractérisé en ce que**

- au moins à travers le plan d'une des têtes de soupape d'admission 5' au niveau du siège étanche ou des sièges étanches, le point de percée $Sp_{inj}$ de l'axe d'injecteur 7 présente un écart " a " par rapport à un centre d'une tête de soupape d'admission (5'),
- pour lequel on a dans le cas d'une position optimale de l'injecteur :

$$a/(D_{ev}/2) \leq 1,6,$$

où $D_{ev}$ est le diamètre de la soupape d'admission.

**2.** Moteur à combustion interne selon la revendication 1,
**caractérisé en ce que**

- les soupapes d'admission (5) agissent conjointement avec un dispositif destiné au réglage progressif de levée, dans des conditions où,
- en intercalant un élément de transmission muni d'un galet (levier oscillant, cloche), chaque soupape d'admission (5) est en liaison effective avec une trajectoire de commande, comprenant une came de levée à vide et une came de levée, dans une zone d'extrémité d'un levier pivotant qui est commandé par une came d'un arbre à cames afin de provoquer la levée de la soupape d'admission (5) et
- qui est associé par effet de ressort à la came au moyen d'une trajectoire de came et qui à l'autre extrémité, afin d'assurer le réglage progressif de la levée, est soutenu le long d'une trajectoire de came au moyen d'un point d'appui pivotant qui peut être fixé et modifié en longueur en étant commandé à l'aide d'une installation de réglage.

**3.** Moteur à combustion interne selon la revendication 1,
**caractérisé en ce qu'**
un actionneur électromagnétique sert au réglage progressif de la levée d'une soupape d'admission (5).

Fig. 1